# EUROPEAN PATENT SPECIFICATION

(11) **EP 0 571 381 B1**
(45) Date of publication and mention of the grant of the patent: **11.09.1996**
(21) Application number: 91904918.9
(22) Date of filing: 14.02.1991
(51) Int. Cl.: C08G 69/28, C08G 69/46

(54) **PROCESS FOR PRODUCING PARA-ARAMID WITH LOW Ca++ AND CHORIDE CONTENT**
VERFAHREN ZUR HERSTELLUNG VON PARA-ARAMID MIT NIEDRIGEM Ca++ UND CHLORID-GEHALT
PROCEDE DE TRAITEMENT SERVANT A PRODUIRE UN PARA-ARAMIDE A FAIBLE TENEUR DE Ca++ ET DE CHLORURE

(43) Date of publication of application: 01.12.1993
(73) Proprietor: E.I. DU PONT DE NEMOURS AND COMPANY, Wilmington Delaware 19898 (US)
(72) Inventor: GABARA, Vlodek, Richmond, VA 23233 (US); NEWELL, Robert, Mahlon, Richmond, VA 23234 (US); TSIMPRIS, Constantine, William, Richmond, VA 23235 (US)
(74) Representative: Abitz, Walter, Dr.-Ing.
(86) International application number: US9100882
(87) International publication number: WO9214774

(56) References cited:
- US-A- 4 297 479
- US-A- 4 308 374

## Description

### Background of the Invention

This invention relates to a process for making para-aramids, particularly poly(para-phenylene terephthalamide), and it relates specifically, to elements of such a process whereby the concentration of residual cations and anions in the para-aramid product can be maintained below 500 parts, by weight, per million parts of para-aramid.

### Summary of the Invention

The process of this invention relates to making para-aramid wherein a diamine and a diacid chloride are placed in reactive contact in a solvent system comprising a water miscible amide and calcium chloride to yield a para-aramid reaction product and wherein the reaction product is separated from the solvent system by several cycles of washing with water.

The invention, specifically, relates to reducing the concentration of ionic contaminants such as Ca⁺⁺ and Cl⁻ by washing the para-aramid reaction product, first in at least one cycle, with water containing a pH adjusting agent to adjust the pH of the water/polymer/solvent mass to be less than 4.5 and washing the para-aramid reaction product, next in at least one cycle, with water containing a pH adjusting agent to adjust the pH of the water/polymer/solvent mass to be greater than 5.5.

The preferred para-aramid is poly(para-phenylene terephthalamide) (PPD-T).

### Detailed Description of the Invention

Para-aramids are well-known as materials of choice in manufacture of extremely strong fibers and yarn products. Para-aramids are produced in liquid polymerization solvent systems and the solvent is, generally, an amide solvent with a chloride salt to enhance solution of the polymer during the polymerization reaction. The para-aramid, once made, must be isolated and dried. The para-aramid and the solvent system in which it is contained, as a mass of precipitated polymer sometimes characterized as "crumb", is washed with water to remove the solvent; and, then, the washed polymer crumb is dried. Washing the crumb is important, not only to remove the solvent from the polymer, but also, to remove the residual salt. Residual salt in the para-aramid can result in corrosion in equipment later used to process the polymer, formation of insoluble species in fiber spinning solutions, and poor fiber properties.

Before the present invention, there was no realization that control of the pH of the washing water would improve the efficiency of removal of the ionic species from the para-aramid crumb. Now it is understood that, if the wash water is maintained at a pH of less than 4.5, the calcium cations will not be ionically attached to the para-aramid and will be more easily washed away from the crumb. It is, also, understood that, if the wash water is maintained at a pH of more that 5.5, the chloride anions will not be ionically attached to the para-aramid and will be more easily washed away from the crumb. In washing the crumb, there are usually several cycles of washing; and, in conduct of the process of this invention, each of the above-mentioned steps must be conducted in at least one of the cycles.

The order of the washing steps is of critical importance to the practice of this invention. The washing step at pH less than 4.5 must be conducted before the washing step at pH greater than 5.5. In the washing step at pH less than 4.5, the calcium cations are released from the para-aramid and can be washing away leaving hydrogen ions behind while chloride ions can be washed away in the washing step at pH greater than 5.5. If the wash at pH greater than 5.5 were to be conducted first, the chloride ions could be washed away; but they would be replaced during addition of the acid in the wash at pH less than 4.5.

In the polymerization reaction, hydrochloric acid is generated as a by product and the reaction system is highly acid prior to the washing steps. Generally, a basic material is added to the reaction system to neutralize the acid and then the washing is begun. The washing has been conducted, in the past, with a basic water solution or with large amounts of water; and the washing has taken lengthy times and has required large vessels for handling the water and for separating the wash water from the amide solvent of the polymerization reaction. The neutralizing agent can be sodium bicarbonate, sodium carbonate, sodium hydroxide, or the like; and, if required, the wash water can be acidified using hydrochloric acid or the like. Neutralization and washing are, of course, conducted with a high degree of agitation and at a convenient temperature - generally from 10 to 80°C.

In washing para-aramid crumb, there are,generally, several washing steps. To conduct a washing step, water is added to the crumb; and the crumb and water and whatever solvent remains, is agitated until an equilibrium of the liquids is approached. In the first washing step of this invention, enough neutralizing agent is added to the wash water that the pH of the agitating water/crumb/solvent mass remains at a pH of less than 4.5 throughout the agitation. The minimum acceptable pH is a matter of practicality and judgment. The lower pH limit should be controlled by operator safety, corrosion of the equipment, polymer stability, and the like. It is recommended that a pH below about 1 is unnecessary. In the second washing step of this invention, enough neutralizing agent is added to the wash water that the pH of the agitating mass remains at a pH of greater than 5.5 throughout the agitation. The upper acceptable pH is a matter of practicality and judgment and the upper limit should be controlled by other factors. It is recommended that a pH above about 10 is unnecessary.

As stated, the process of this invention can be practiced batch-wise or continuously. In a continuous process,the wash water from the last wash is used to wash the polymer from the penultimate wash, and that filtrate is used to wash the previous polymer. This countercurrent washing is continued for the entire process, thereby allowing the use of the minimum amount of water to achieve the required purity standards.

The process of this invention is especially useful for purification of PPD-T produced in a solvent composed of dimethylacetamide or N-methyl pyrrolidone (NMP) using calcium chloride as the solution enhancer. The polymerization of PPD-T can be accomplished by a batch process, as described, for example, in U.S. Patent 4,297,478, or by a continuous process as described in U.S. Patent 3,850,888.

### Description of the Preferred Embodiments Example A (Comparison)

700 gms of para-aramid crumb from a PPD-T polymerization as described in U.S. Patent 4,297,478 (11% solids in NMP/CaC12) were vigorously agitated with 700 ml distilled water in a Waring Blender. The para-aramid was neutralized by adjusting the pH to 8.0 by the addition of NaOH. The mixture was filtered on a Buchner funnel; and the crumb was mixed with about 800 ml of distilled water, filtered, and then mixed again with 800 ml of distilled water. The para-aramid was washed in this way a total of 10 times; and was, then, dried and analyzed for calcium and chloride content. The dried PPD-T was found to contain 1200 ppm Ca⁺⁺ and 1000 ppm Cl⁻.

### Example 1

The same procedure as described in the Comparison (Example A) was followed except that the pH was adjusted to 4.0 when the para-aramid crumb and water are first agitated together. After the 10 washing cycles, Ca⁺⁺ content of the resulting PPD-T was found to be 84 ppm and the Cl⁻ content was 520 ppm.

### Example B (Comparison)

500 gms of the para-aramid crumb from Example A were vigorously agitated with 500 ml distilled water in a Waring Blender. The mixture was filtered on a Buchner funnel and mixed again with 500 ml distilled water. The pH, initially at 0.3, was adjusted to 3.0 by the addition of NaOH. The crumb was agitated with 500 ml of distilled water and filtered; and that was repeated a total of 7 times. The polymer was then dried and analyzed for calcium and chloride content. The PPD-T was found to contain 33 ppm Ca⁺⁺ and 716 ppm Cl⁻.

### Example 2

The same procedure as described in Comparison Example B was followed except that the pH was adjusted to 7.0 in the seventh wash. The crumb was then dried and analyzed for chloride content. The PPD-T was found to contain 30 ppm Ca⁺⁺ and 245 ppm Cl⁻.

## Claims

1. A process for making para-aramid wherein a diamine and a diacid chloride are placed in reactive contact in a solvent system comprising a water miscible amide and calcium chloride to yield a para-aramid reaction product and wherein the reaction product is separated from the solvent system by several cycles of washing with water,
characterized in that it comprises the steps of:
(i) washing the para-aramid reaction product, in at least one cycle, with water containing a neutralizing agent to adjust the pH of the water/polymer/solvent mass to be less than 4.5 and then, after the wash of step (i),
(ii) washing the para-aramid reaction product, in at least one cycle, with water containing a neutralizing agent to adjust the pH of the water/polymer/solvent mass to be greater than 5.5.

2. The process of Claim 1 wherein the para aramid is poly(para-phenylene terephthalamide).

## Patentansprüche

1. Verfahren zur Herstellung von para-Aramid, bei dem ein Diamin und ein Disäurechlorid in reaktiven Kontakt in einem Lösungsmittelsystem gegeben werden, das ein wassermischbares Amid und Calciumchlorid umfaßt, um ein para-Aramid-Reaktionsprodukt zu ergeben, und bei dem das Reaktionsprodukt von dem Lösungsmittelsystem durch mehrere Waschcyclen mit Wasser abgetrennt wird, dadurch gekennzeichnet, daß es die Stufen umfaßt:
(i) Waschen des para-Aramid-Reaktionsproduktes in wenigstens einem Cyclus mit Wasser, das ein Neutralisationsmittel enthält, um den pH-Wert der Wasser/Polymer/Lösungsmittelmasse einzustellen, daß er kleiner ist als 4,5, und sodann nach dem Waschen der Stufe (i),
(ii) Waschen des para-Aramid-Reaktionsprodukts in wenigstens einem Cyclus mit Wasser, das ein Neutralisationsmittel enthält, um den pH-Wert der Wasser/Polymer/Lösungsmittelmasse einzustellen, daß er größer ist als 5,5.

2. Verfahren nach Anspruch 1, bei dem das para-Aramid Poly(para-phenylenterephthalamid) ist.

## Revendications

1. Un procédé de préparation de para aramide dans lequel on met en contact réactif une diamine et un chlorure de diacide dans un système de solvant comprenant un amide miscible à l'eau et du chlorure de calcium pour obtenir un para-aramide comme produit de réaction, et dans lequel le produit de réaction est séparé du système solvant par plusieurs cycles de lavage à l'eau, caractérisé en ce qu'il comprend les opérations de:
(i) lavage du para-aramide produit par la réaction, par au moins un cycle, à l'aide d'eau contenant un agent neutralisant pour ajuster le pH de la masse eau/polymère/solvant en-dessous de 4,5, puis, après le lavage de l'opération (i),
(ii) lavage du para-aramide, produit par la réaction, par au moins un cycle, à l'aide d'eau contenant un agent neutralisant pour ajuster le pH de la masse eau/polymère/solvant au-dessus de 5,5.

2. Le procédé selon la revendication 1, dans lequel le para-aramide est la poly-(paraphénylènetéréphtalamide).
